# EUROPÄISCHE PATENTSCHRIFT

(11) **EP 3 539 850 B1**
(45) Veröffentlichungstag und Bekanntmachung des Hinweises auf die Patenterteilung: **07.04.2021**
(21) Anmeldenummer: 18181487.2
(22) Anmeldetag: 03.07.2018
(51) Int. Cl.: B62D 7/18

(54) **ACHSKÖRPER MIT EINEM ÜBER EIN DREHGELENK VERBUNDENEN LENKBAREN RADTRÄGER**
AXLE BODY COMPRISING WHEEL SUPPORT WHICH CAN BE STEERED USING A SWIVEL JOINT
CORPS D'ESSIEU DOTÉ D'UN SUPPORT DE ROUE ORIENTABLE RELIÉ AU MOYEN D'UNE ARTICULATION TOURNANTE

(30) Priorität: 15.03.2018 DE 102018106081
(43) Veröffentlichungstag der Anmeldung: 18.09.2019
(73) Patentinhaber: GIGANT GmbH, 49413 Dinklage (DE)
(72) Erfinder: Kröger, Andreas, 49393 Lohne (DE); Kühr, Kai, 49413 Dinklage (DE)
(74) Vertreter: Weeg, Thomas

(56) Entgegenhaltungen:
- EP-A2- 2 008 914
- DE-A1-102012 210 248
- DE-A1-102014 105 155
- DE-U1- 20 304 107
- FR-A1- 2 842 162
- US-A- 1 926 549
- US-A- 3 479 051

## Beschreibung

Die vorliegende Erfindung bezieht sich auf einen Achskörper nach dem Oberbegriff des Anspruchs 1.

Eine Lenkachse ist aus der Schrift US 1,926,549 bekannt. In der dort offenbarten Lenkachse sind teilkugelförmig geformte Pilzköpfe als Teile eines Drehlagers verwendet. Die Pilzköpfe sind in Ausnehmungen in der Achsfaust eingesteckt. In der gattungsbildenden Lenkachse aus der Schrift US 3,479,051 sind die Pilzköpfe in identischer Ausrichtung auf einen Steckbolzen aufgesteckt, der beide Pilzköpfe durchgreift und als Spannschraube in seiner Einbaulage hält. In der ebenfalls gattungsgemäßen Schrift EP 2 008 914 A3 sind Pilzköpfe offenbart, die in einer Lagerung gehalten sind. Die Haltekräfte, mit denen die Pilzköpfe in ihrer Einbaulage gehalten sind, müssen jeweils über die Verschraubung mit dem Träger erzeugt werden.

Weitere Lenkachsen sind aus den Schriften DE 203 04 107 U1 und DE 10 2014 105 155 A1 bekannt. Die Verbindung des Radträgers mit dem Achskörper erfolgt jeweils über einen Bolzen, um den die radträgerseitige Lenkgabel mit ihren beabstandet zueinander angeordneten Gabelschenkeln drehbar ist. Die Drehlager sind zylindrisch und können mehrdimensional einwirkende Kräfte nicht ideal übertragen.

Ein Problem dieser Technik ist darin zu sehen, dass die Lenkung laufend geschmiert werden muss. Dadurch entsteht ein hoher Wartungsaufwand. Bei Reparaturen muss die gesamte Achse ausgebaut werden, da der Bolzen mit handlichem Werkzeug nicht zugänglich ist. Der Bolzen muss mit schwerem Werkzeug aus seiner Einbaulage ausgetrieben werden. Toleranzen können bei diesem Achslenkerkonzept an den Gleitflächen des Bolzens und des Lenkers nicht ausgeglichen werden.

Der Schrift DE 10 2012 210 248 ist eine Lagervorrichtung zu entnehmen, bei der am Bolzen beabstandet zueinander zwei Drehlager ausgebildet sind. Das obere der beiden Drehlager ist als konisches Kegelrollenlager ausgebildet, welches für sich bereits aufwendig ist und eine sehr genaue Justierung bei der Montage erfordert. Auch hier können Toleranzen nur schwer ausgeglichen werden. Das konische Kegelrollenlager kann mehrdimensional einwirkende Kräfte nicht optimal aufnehmen. Das untere der beiden Drehlager ist eine dem Achskörper zugeordnete Teilkugelfläche, auf die eine dem Radträger zugeordnete hohle Halbkugel als korrespondierende Gleitfläche aufgesetzt ist. Die Teilkugelfläche und die hohle Halbkugel bilden eine Gleitflächenpaarung. Die Teilkugelfläche ist der Achsfaust zugewandt und starr mit dieser über den Bolzen verbunden. Auch muss die Achse komplett demontiert werden, wenn der Bolzen ersetzt werden soll.

Es ist die Aufgabe der vorliegenden Erfindung, die Verschraubung der Pilzköpfe zu entlasten und diese immer noch leicht montierbar und kostengünstig herstellbar zu halten, so dass diese wartungsarm betreibbar und im Reparaturfall leicht austauschbar sind.

Die Aufgabe wird für einen gattungsgemäßen Achskörper durch die kennzeichnenden Merkmale des Anspruchs 1 gelöst.

Durch die teilkugelförmige Oberfläche des Pilzkopfes als erstem Teil und die korrespondierend dazu ausgebildete als Hohlform ausgestaltete Gleitfläche als zweitem Teil eines jeweiligen Gleitlagers kann ein Drehgelenk hergestellt werden, dessen Bauteile kostengünstig zu fertigen und montieren sind. Eine einzige Kugel oder Teilkugel ist also in zwei voneinander getrennte Kugelteile aufgeteilt und die beiden Kugelteile sind von der Achsfaust oder in der Lenkgabel beabstandet so zueinander gehalten, dass jedes Kugelteil mit der zugehörigen Gleitfläche ein Drehlager bildet. Durch die beiden Kugelteile wird die Drehachse definiert, um die der Radträger verschwenkbar ist, und der Radträger ist darüber an zwei Verbindungspunkten mit der Achsfaust verbunden.

Der Pilzkopf ist formschlüssig über eine eine Drehbewegung des Pilzkopfes hemmende Form in seiner Einbaulage gehalten. Um den Pilzkopf starr und bewegungsfrei in seiner Einbaulage zu halten, kann über die formschlüssige Verbindung des Pilzkopfes mit seinem Träger - der Achsfaust oder dem Gabelschenkel - vermieden werden, dass die Haltekräfte allein über die Verschraubung des Pilzkopfes mit seinem Träger hergestellt werden müssen. Die formschlüssige Verbindung über eine eine Drehbewegung des Pilzkopfes hemmende Form kann beispielsweise über eine Verzahnung, eine exzentrische Außenform des Pilzkopfes, die in eine trägerseitige Aufnahme eingesetzt ist, eine exzentrisch angeordnete Halteschraube oder ähnliche Vorrichtungen hergestellt werden.

Die Größe der Pilzköpfe und der zugehörigen Gleitflächen können so gewählt werden, dass sie hohe Kräfte aufzunehmen vermögen. Gerade bei Nutzfahrzeugen wirken große Kräfte aus dem Eigengewicht, der Nutzlast des Fahrzeugs und den fahrdynamischen Vorgängen aus dem Kontakt der Reifen zur Fahrbahn auf die Schwenklager eines lenkbaren Radträgers ein. Über die sphärischen Formen der beiden Pilzköpfe und der Gleitflächen werden auch mehrdimensional einwirkende Kräfte gut aufgenommen und abgeleitet, und zwar an beiden Gabelschenkeln der Lenkgabel und auf beiden Seiten der Achsfaust. Dies ist vorteilhaft, weil die Lenkachse aus unterschiedlichen Richtungen belastet wird und sich die Krafteinwirkungsrichtung bei fahrdynamischen Prozessen auch laufend verändert. Durch die zwei getrennten Pilzköpfe können die einwirkenden Kräfte an beiden Enden der Drehachse mehrdimensional aufgenommen werden. Indem die beiden Pilzköpfe zumindest durch das Höhenmaß der Achsfaust voneinander getrennt sind, ergibt sich eine bessere Hebelwirkung, die Lagerung des Radträgers über die Pilzköpfe kann dadurch hohe Haltekräfte aufbieten.

Die Pilzköpfe können jeweils eine Halbkugelform oder eine geringere Teilkugelform als eine Halbkugel aufweisen, damit sie einfach herstellbar und montierbar sind. Die zugehörigen Gleitflächen weisen eine dieser Form entsprechende Hohlform auf. Über die teilkugelförmigen Formen der beiden Teile der Gleitflächenpaarung zentrieren sich die Teile des Drehlagers selbsttätig und spielfrei. Auf die Montage eines gesonderten Bolzens kann verzichtet werden.

Die Drehlager können jeweils geschlossen hergestellt werden, so dass eine bei der Herstellung des Achskörpers erfolgende Füllung des Drehlagers mit einem Schmiermittel nicht bei späteren Wartungsarbeiten überprüft und nachbefüllt oder ersetzt werden muss und auch kein Schmutz in das Drehlager eindringen kann. Sollten die Drehlager gleichwohl einen Verschleiß oder sonstigen Schaden aufweisen, können beide Teile leicht ausgetauscht werden, ohne dass dafür die Lenkachse insgesamt ausgebaut werden muss.

Der erste Teil eines Drehlagers ist der achsfaustseitige Teil des Drehlagers und der zweite Teil eines Drehlagers der gabelschenkelseitige Teil. Indem der Pilzkopf auf der Achsfaust und die dazu korrespondierende Gleitfläche am Gabelschenkel angeordnet sind, können die einwirkenden Kräfte gut von der Achsfaust in den Radträger und umgekehrt übertragen werden. Der Pilzkopf kann gut mit der Achsfaust verbunden und die korrespondierende Gleitfläche gut an dem Gabelschenkel ausgebildet werden.

Die Pilzköpfe sind jeweils mit einem Schraubbolzen drehfest mit der Achsfaust verschraubt. Die Schraubverbindung ist zuverlässig und bei der Herstellung kostengünstig. Im Reparaturfall kann die Schraubverbindung leicht gelöst werden, um einen Pilzkopf auszutauschen.

Nach einer Ausgestaltung der Erfindung sind die Pilzköpfe so auf der Achsfaust montiert, dass die sich verjüngenden Enden der teilkugelförmigen Oberflächen der Pilzköpfe jeweils der Achsfaust abgewandt sind. Die teilkugelförmigen Oberflächen der Pilzköpfe sind mit ihrer Basis also einander zugewandt, aber in einem Abstand zueinander an der Achsfaust montiert, so dass die jeweilige Basis über die größere Fläche gut mit der Achsfaust verbunden werden kann. Die beiden Oberflächen der Pilzköpfe weisen entlang der Drehachse in entgegengesetzte Richtungen und ermöglichen auf diese Weise eine spiegelsymmetrische Zentrierung der an die Drehlager angreifenden Gabelschenkel und eine gleichmäßige Kraftübertragung zwischen der Achsfaust des Achskörpers und der Lenkgabel des Radträgers.

Nach einer Ausgestaltung der Erfindung ist der zweite Teil eines jeweiligen Drehlagers als Keilring ausgebildet, dessen dem Pilzkopf zugewandte Oberfläche an die sphärische Oberflächenform des Pilzkopfes angepasst ist. Der Keilring ist kostengünstig herstellbar und montierbar. Der Keilring kann leicht auf den Pilzkopf aufgesetzt und in seiner Einbaulage gehalten werden. Auch ein Ausgleich von Toleranzen ist über den Keilring leicht möglich.

Nach einer Ausgestaltung der Erfindung ist der jeweilige Keilring durch ein an seinem Außenumfang ausgebildetes Schraubgewinde oder durch einen auf den Keilring aufgeschraubten Schraubdeckel in seiner Einbaulage gehalten. Über die Verschraubung entweder am Keilring selbst oder an einem separaten Schraubdeckel kann der Keilring bei der Erstmontage oder einer späteren Reparatur stufenlos und präzise auf genau den Abstand zum Pilzkopf eingestellt werden, bei dem die Gleitflächen eine spielfrei miteinander korrespondierende Gleitflächenpaarung bilden. Bei einem Verschleiß im Gleitlager kann der Keilring durch eine einfache Drehung am Keilring oder dem Schraubdeckel nachjustiert werden. Falls doch einmal das Drehlager geöffnet werden müsste, um das Schmiermittel nachzufüllen oder zu ersetzen oder eine sonstige Reparatur am Drehlager vorzunehmen, ist dies über die Schraubverbindung schnell und leicht möglich. Nach dem Abschrauben des Keilrings sind alle Flächen der Gleitflächenpaarung gut zugänglich. Über die Öffnung kann auch eine Befestigungsschraube des Pilzkopfes gelöst und entnommen werden, wenn der Keilring am Gabelschenkel befestigt ist. So kann der Pilzkopf selbst im Reparaturfall leicht und schnell ausgetauscht werden.

Nach einer Ausgestaltung der Erfindung weist der Keilring kein Außengewinde auf und ist über einen auf dem Keilring aufliegenden Spanndeckel in seiner Einbaulage gehalten, der über Spannschrauben, die mit einem mit dem Träger verschraubten Verschlussdeckel verschraubt sind, vorgespannt ist.

Nach einer Ausgestaltung der Erfindung sind die Pilzköpfe über einen einzigen Schraubbolzen miteinander verschraubt. Durch den einen Schraubbolzen werden die Montage und eine eventuelle Reparatur vereinfacht.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher erläutert werden. Es zeigen:
- Fig. 1:: eine Seitenansicht auf einen Achskörper mit einem damit über ein Drehgelenk verbundenen Radträger,

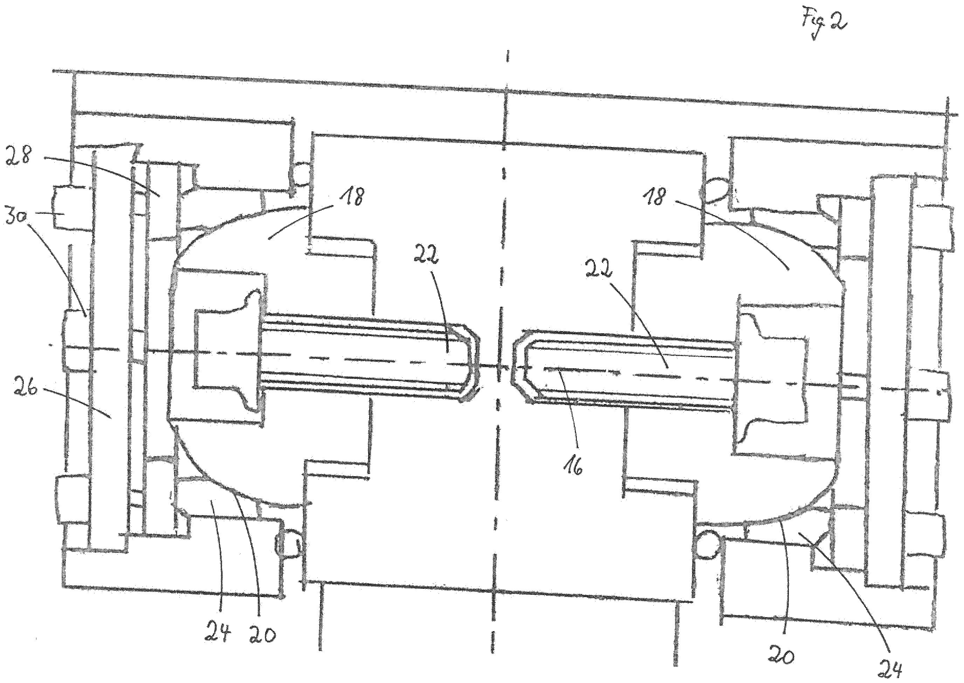

- Fig. 2:: eine vergrößerte Ansicht des Drehgelenks, und
- Fig. 3:: eine Seitenansicht auf einen Achskörper gemäß der Fig. 1 mit einem einzigen durchgehenden Schraubbolzen.

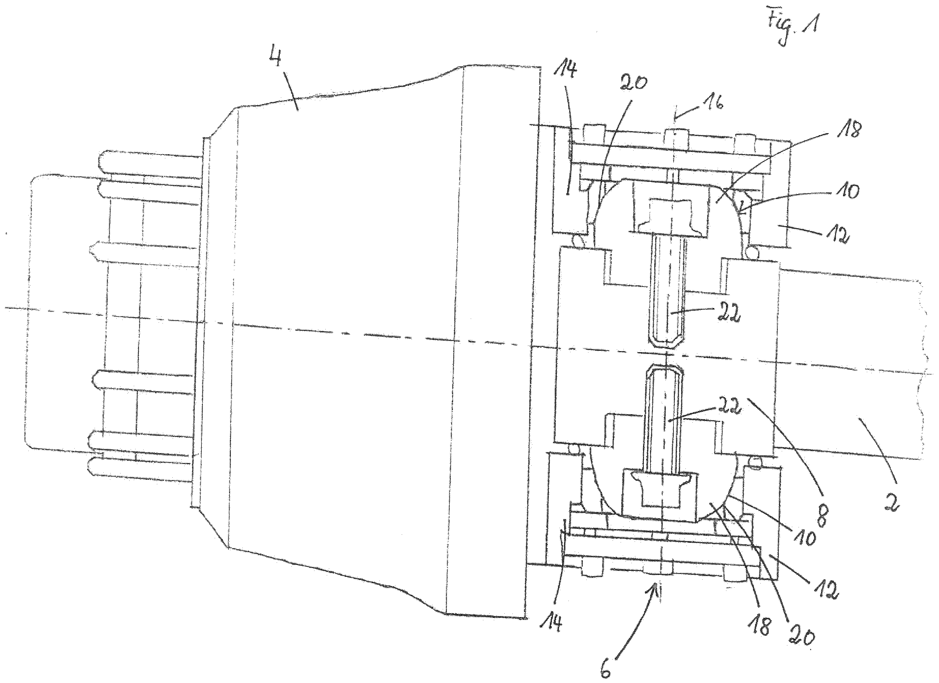

In Fig. 1 ist eine Seitenansicht auf einen Achskörper 2 mit einem damit über ein Drehgelenk 6 verbundenen Radträger 4 gezeigt, wobei vom Drehgelenk eine Schnittansicht zu sehen ist. Die Achsfaust 8 weist an ihrem oberen und unteren Ende jeweils ein Drehlager 10 auf. Über das Drehlager 10 ist die Achsfaust 8 mit einer Lenkgabel 12 verbunden. Die Lenkgabel 12 verfügt über einen oberen und unteren Gabelschenkel 14, die jeweils über das zugehörige Drehlager 10 mit der Achsfaust 8 verbunden sind. Die beiden Drehlager 10 definieren mit ihrer räumlichen Lage auch die Lage der Drehachse 16.

Auf das obere und untere Ende der Achsfaust 8 sind Pilzköpfe 18 aufgesetzt. Die beiden Pilzköpfe 18 sind mit ihrer Basis einander zugewandt auf der Achsfaust 8 befestigt. Die Pilzköpfe 18 sind jeweils über einen Schraubbolzen 22 mit der Achsfaust 8 verbunden.

Gabelschenkelseitig sind Gleitflächen 20 ausgebildet, die sich im Ausführungsbeispiel in Keilringen 24 befinden. Die Gleitflächen 20 sind in einer Hohlform an die Teilkugelform der Pilzköpfe 18 angepasst, so dass die Gleitflächen 20 mit den Pilzköpfen 18 jeweils eine Gleitflächenpaarung bilden. Die Keilringe 24 sind so im Verhältnis zum jeweiligen Pilzkopf 18 ausgerichtet und feinjustiert, dass sich ein spielfreier Sitz der Gleitflächen 20 auf den Oberflächen der Pilzköpfe 18 ergibt.

Im Ausführungsbeispiel sind die Keilringe 24 in einen zylindrischen Kanal im zugehörigen Gabelschenkel 14 eingesetzt. Die Keilringe 24 sind selbst in diesem Kanal nicht verschraubt. Sie werden in ihrer Einbaulage von einem Spanndeckel 28 gehalten, der über Spannschrauben 30 gegen einen Verschlussdeckel 26 verspannt ist, der auf den zugehörigen Gabelschenkel 14 aufgeschraubt ist. Der Verschlussdeckel 26 muss nicht als geschlossener Deckel ausgebildet sein, er kann auch eine Ringform aufweisen. Ein Spanndeckel 28 verschließt den jeweiligen Bauraum, in dem sich der zugehörige Pilzkopf 18 mit dem Keilring 24 befinden, nach außen hin und dichtet ihn gegen eindringenden Schmutz ab.

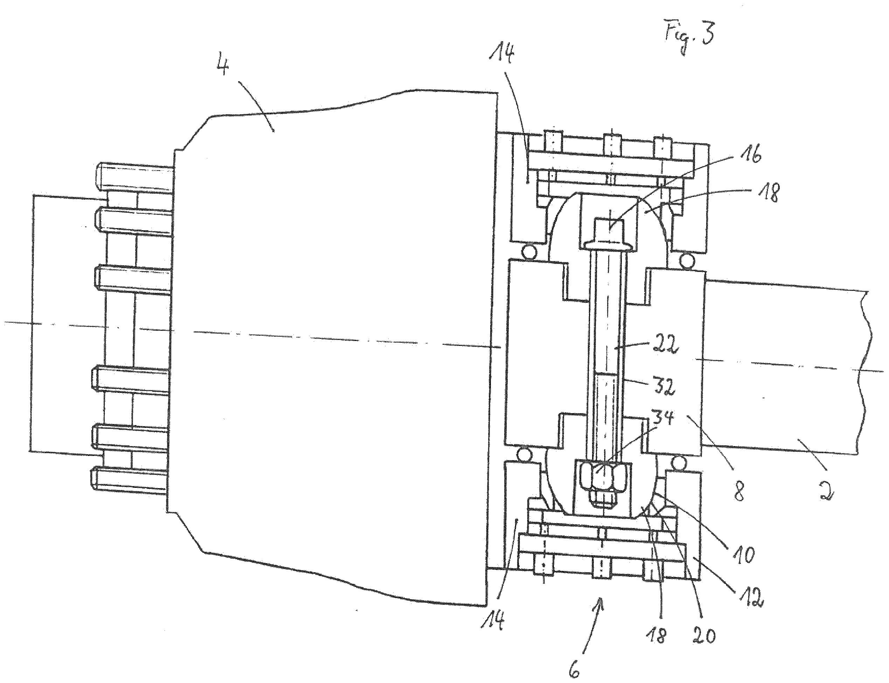

In Fig. 3 ist nochmals das in Fig. 1 gezeigte Drehgelenk gezeigt, allerdings mit nur einem einzigen Schraubbolzen 22, über den die Pilzköpfe miteinander verschraubt sind. Durch den einzelnen Schraubbolzen 22, der durch einen in der Achsfaust 8 befindlichen durchgehenden Schraubenkanal 32 hindurch gesteckt ist, muss der Schraubbolzen 22 nur noch an einem Ende mit der Schraubmutter 34 verschraubt werden. Es kann darauf verzichtet werden, Gewinde in die Achsfaust 8 einzubringen, und im Reparaturfall muss der Schraubbolzen 22 nur noch auf der Seite zugänglich sein, auf der die Schraubmutter 34 aufgeschraubt ist, wenn der Schraubkopf des Schraubbolzens 22 am anderen Ende formschlüssig in seiner Einbaulage gehalten ist. Dazu können entsprechende Formen in einen der Pilzköpfe 18 eingegossen oder eingefräst sein.

Die Erfindung ist in den Ansprüchen definiert.

## Patentansprüche

1. Achskörper (2) mit einem über ein Drehgelenk (6) verbundenen lenkbaren Radträger (4), der Achskörper (2) weist eine starr mit ihm verbundene Achsfaust (8) auf, an deren oberen und unteren Ende jeweils ein Drehlager (10) ausgebildet ist, der Radträger (4) weist eine Lenkgabel (12) mit einem oberen und einem unteren Gabelschenkel (14) auf, die Gabelschenkel (14) drehen bei einer Lenkbewegung auf dem jeweils zugeordneten Drehlager (10), die beiden Drehlager (10) definieren eine Drehachse (16), um die die Lenkgabel (12) um die Achsfaust (8) herum drehbar ist, ein erster Teil jedes Drehlagers (10) ist als teilkugelförmig geformter Pilzkopf (18) ausgebildet und der zweite Teil eines jeweiligen Drehlagers (10) ist zumindest bereichsweise als eine als Negativform zur teilkugelförmigen Form des Pilzkopfes (18) ausgeformte Gleitfläche ausgebildet, die bei einer Lenkbewegung auf der teilkugelförmigen Oberfläche des Pilzkopfes (18) dreht, so dass die teilkugelförmig geformten Pilzköpfe und die am zweiten Teil jedes Drehlagers (10) ausgebildeten korrespondierenden Gleitflächen (20) jeweils eine Gleitflächenpaarung eines Drehlagers (10) bilden, der erste Teil eines Drehlagers (10) der achsfaustseitige Teil des Drehlagers (10) und der zweite Teil eines Drehlagers (10) der gabelschenkelseitige Teil ist, und die Pilzköpfe (18) jeweils mit einem Schraubbolzen (22) drehfest mit der Achsfaust (8) verschraubt sind, **dadurch gekennzeichnet, dass** der Pilzkopf (18) formschlüssig über eine eine Drehbewegung des Pilzkopfes (18) hemmende Form in seiner Einbaulage gehalten ist.

2. Achskörper (2) nach Anspruch 1, **dadurch gekennzeichnet, dass** die Pilzköpfe (18) so auf der Achsfaust (8) montiert sind, dass die sich verjüngenden Enden der teilkugelförmigen Oberflächen der Pilzköpfe (18) jeweils der Achsfaust (8) abgewandt sind.

3. Achskörper (2) nach einem der vorhergehenden Ansprüche, **dadurch gekennzeichnet, dass** der zweite Teil eines jeweiligen Drehlagers (10) als Keilring (24) ausgebildet ist, dessen dem Pilzkopf (18) zugewandte Oberfläche an die sphärische Oberflächenform des Pilzkopfes (18) angepasst ist.

4. Achskörper (2) nach Anspruch 3, **dadurch gekennzeichnet, dass** der jeweilige Keilring (24) durch ein an seinem Außenumfang ausgebildetes Schraubgewinde oder durch einen auf den Keilring (24) aufgeschraubten Schraubdeckel in seiner Einbaulage gehalten ist.

5. Achskörper (2) nach Anspruch 3 oder 4, **dadurch gekennzeichnet, dass** der Keilring (24) kein Außengewinde aufweist und über einen auf dem Keilring (24) aufliegenden Spanndeckel (28) in seiner Einbaulage gehalten ist, der über Spannschrauben (30), die mit einem mit dem Träger verschraubten Verschlussdeckel (26) verschraubt sind, vorgespannt ist.

6. Achskörper (2) nach einem der vorhergehenden Ansprüche, **dadurch gekennzeichnet, dass** die Pilzköpfe (18) über einen einzigen Schraubbolzen (22) miteinander verschraubt sind.

## Claims

1. Axle body (2) having a steerable wheel carrier (4) connected via a swivel joint (6), the axle body (2) has an axle stub (8) rigidly connected thereto, a swivel bearing (10) is formed respectively at the upper and lower end of the axle stub, the wheel carrier (4) has a steering fork (12) with an upper and a lower fork leg (14), the fork legs (14) swivel on the respectively associated swivel bearing (10) during a steering movement, the two swivel bearings (10) define a swivel axis (16), around which the steering fork (12) can swivel about the axle stub (8), a first part of each swivel bearing (10) is configured as a part-spherical mushroom head (18) and the second part of a respective swivel bearing (10) is configured at least in part as a sliding surface shaped as the negative shape to the part-spherical shape of the mushroom head (18), which sliding surface swivels on the part-spherical surface of the mushroom head (18) during a steering movement so that the part-spherical mushroom heads and the corresponding sliding surfaces (20) formed on the second part of each swivel bearing (10) in each case form a sliding surface pairing of a swivel bearing (10), the first part of a swivel bearing (10) is the part of the swivel bearing (10) on the axle stub side and the second part of a swivel bearing (10) is the part on the fork leg side, and the mushroom heads (18) are in each case screwed to the axle stub (8) by a bolt (22) in such a way as to swivel therewith, **characterised in that** the mushroom head (18) is held in its installed position by a form fit by way of a shape that prevents a rotational movement of the mushroom head (18).

2. Axle body (2) according to claim 1, **characterised in that** the mushroom heads (18) are mounted on the axle stub (8) in such a way that the tapering ends of the part-spherical surfaces of the mushroom heads (18) in each case face away from the axle stub (8).

3. Axle body (2) according to any one of the preceding claims, **characterised in that** the second part of a respective swivel bearing (10) is configured as a wedge ring (24), the surface of which facing towards the mushroom head (18) is adapted to the spherical surface shape of the mushroom head (18) .

4. Axle body (2) according to claim 3, **characterised in that** the respective wedge ring (24) is held in its installed position by a screw thread formed on its outer circumference or by a screw-on cap screwed onto the wedge ring (24).

5. Axle body (2) according to claim 3 or 4, **characterised in that** the wedge ring (24) has no external thread and is held in its installed position by way of a clamping cap (28) which bears against the wedge ring (24), which clamping cap is pretensioned by way of clamping screws (30) which are screwed to a closure cap (26) screwed to the carrier.

6. Axle body (2) according to any one of the preceding claims, **characterised in that** the mushroom heads (18) are screwed to one another by way of a single bolt (22).

## Revendications

1. Corps d'essieu (2) comprenant un support de roue dirigeable (4) relié par le biais d'une articulation pivotante (6), le corps d'essieu (2) présente un bout d'essieu (8) qui est relié de manière rigide avec celui-ci et sur lequel, à ses extrémités supérieure et inférieure, est respectivement réalisé un palier pivotant (10), le support de roue (4) présente une fourche de direction (12) avec une branche de fourche (14) supérieure et inférieure, les branches de fourche (14) tournent lors d'un mouvement de direction sur le palier pivotant (10) respectif associé, et les deux paliers pivotants (10) définissent un axe de rotation (16), autour duquel la fourche de direction (12) peut tourner autour du bout d'essieu (8), une première partie de chaque palier pivotant (10) est réalisée sous la forme d'un picot en forme de champignon partiellement sphérique (18) et la seconde partie d'un palier pivotant respectif (10) est réalisée au moins par sections sous la forme d'une surface coulissante, qui est formée par une forme négative par rapport à la forme partiellement sphérique du picot en forme de champignon (18) et qui tourne, lors d'un mouvement de direction, sur la surface partiellement sphérique du picot en forme de champignon (18) de telle sorte que les picots en forme de champignon formés de manière partiellement sphérique et les surfaces coulissantes correspondantes (20) réalisées sur la seconde partie de chaque palier pivotant (10) forment respectivement une paire de surfaces coulissantes d'un palier pivotant (10), la première partie d'un palier pivotant (10) est la partie du palier pivotant (10) côté bout d'essieu et la seconde partie d'un palier pivotant (10) est la partie côté branche de fourche, et les picots en forme de champignon (18) sont respectivement vissés avec le bout d'essieu (8) de manière fixe en rotation à l'aide d'un boulon à vis (22), **caractérisé en ce que** le picot en forme de champignon (18) est maintenu dans sa position de montage par complémentarité de forme par le biais d'une forme empêchant un mouvement de rotation du picot en forme de champignon (18).

2. Corps d'essieu (2) selon la revendication 1, **caractérisé en ce que** les picots en forme de champignon (18) sont montés sur le bout d'essieu (8) de telle sorte que les extrémités des surfaces partiellement sphériques des picots en forme de champignon (18) qui se rétrécissent sont respectivement opposées au bout d'essieu (8) .

3. Corps d'essieu (2) selon une des revendications précédentes, **caractérisé en ce que** la seconde partie d'un palier pivotant (10) est réalisée sous la forme d'une bague de calage (24) dont la surface en regard du picot en forme de champignon (18) est adaptée à la forme de la surface sphérique du picot en forme de champignon (18).

4. Corps d'essieu (2) selon la revendication 3, **caractérisé en ce que** la bague de calage respective (24) est maintenue dans sa position de montage par un filetage de vis réalisé sur sa périphérie extérieure ou par un capuchon vissé, vissé sur la bague de calage (24).

5. Corps d'essieu (2) selon la revendication 3 ou 4, **caractérisé en ce que** la bague de calage (24) ne présente pas de filetage extérieur et est maintenue dans sa position de montage par le biais d'un couvercle de tension (28) appliqué sur la bague de calage (24), lequel est précontraint par des vis de tension (30) qui sont vissées avec un couvercle de fermeture (26) vissé avec le support.

6. Corps d'essieu (2) selon une des revendications précédentes, **caractérisé en ce que** les picots en forme de champignon (18) sont vissés les uns aux autres par le biais d'un seul boulon à vis (22).
